# EUROPEAN PATENT SPECIFICATION

(11) **EP 1 633 200 B1**
(45) Date of publication and mention of the grant of the patent: **21.11.2007**
(21) Application number: 03817063.5
(22) Date of filing: 04.11.2003
(51) Int. Cl.: A23G 9/28, B65B 69/00, B65B 43/54

(54) **DISPENSING DEVICE FOR FOODSTUFF, IN PARTICULAR ICE CREAM**
ABGABEVORRICHTUNG FÜR NAHRUNGSMITTEL, INSBESONDERE SPEISEEIS
DISPOSITIF DE DISTRIBUTION D'ALIMENT, EN PARTICULIER DE LA CREME GLACEE

(30) Priority: 28.05.2003 DE 20308396 U
(43) Date of publication of application: 15.03.2006
(73) Proprietor: Nestec S.A., 1800 Vevey (CH)
(72) Inventor: LODTER, Matthias, 91186 Büchenbach (DE); DISTLER, Sven, 91126 Rednitzhembach (DE); LENGENFELDER, Wolfgang, 90425 Nürnberg (DE)
(74) Representative: Elleby, Gudrun
(86) International application number: PCT/EP2003/012297
(87) International publication number: WO 2004/105502

(56) References cited:
- GB-A- 700 612
- US-A- 2 889 949
- US-A- 4 438 683
- US-A- 5 918 767
- PATENT ABSTRACTS OF JAPAN vol. 2003, no. 07, 3 July 2003 (2003-07-03) -& JP 2003 070423 A (SANDEN CORP), 11 March 2003 (2003-03-11)

## Description

The invention relates to a dispensing device for a portioned foodstuff in accordance with the precharacterizing features of the independent claims.

In order to provide portioned foodstuff, dispensing appliances are known, in which a user can obtain a portion of the foodstuff by operating the dispensing appliance. The foodstuff may be a solid, flowable or pasty foodstuff. The invention is suitable in particular for ice cream or the like, for example whipped cream or other portioned liquids.

A characteristic of such a dispensing device is that the user has to transport a container having therein the foodstuff to be dispensed into a delivery position in which the delivery of the foodstuff can take place. In this case, the insertion of the container in the delivery position is difficult because the construction of the holder for the container and of further parts of the dispensing device in the proximity of the delivery position limits the available space. Relatively great attentiveness and skill is therefore needed for the user in order to insert the container in the delivery position into the dispensing device. In addition, this insertion is difficult due to the fact that the construction of the dispensing device requires the delivery position to be at a certain distance from the operating side of the dispensing device and this distance makes it even more difficult to insert the container into the transfer position.

A dispensing device of the previously described type has also already been proposed, in which different containers are to be inserted and to be removed in two delivery positions arranged one on top of the other. This dispensing device is designed to receive a storage container for the foodstuff in the region of the upper delivery position, the storage container being a package or casing which is filled with certain foodstuff which the user chooses before the operation and has to insert into the delivery position. The foodstuff can be, for example, a certain type of ice cream with which the package is filled. In the region of the lower delivery position, the dispensing device designed to receive a second (receiving) container, for example, an ice-cream cone into which the foodstuff from the first (storage) container is transferred, for example, by pushing the foodstuff out of the storage container by means of a ram and conveying it into the container. This dispensing device has the previously described difficulties in inserting and removing the first container (package) and/or also the second container (ice-cream cone).

US 5,918,767 teaches a dispensing apparatus for dispensing a single serving of a viscous or semi-solid product from a container, the container comprising a base, a deformable portion and an outlet. The apparatus comprises deforming means movable to engage and deform the deformable portion to discharge product from the container through the outlet.

GB 2,889,949 teaches an ice cream dispensing apparatus.

JP 2003-070423 shows a device for extruding semi-solid food.

It is an object of the present invention to proposes a dispensing device with facilitated insertion and removal of the container.

This object is achieved by the features of the independent claims. Advantageous developments are described in the subclaims.

In the dispensing device according to the invention, the holder is connected to the support by an adjusting device and can be moved, while being in the adjusting device, between a delivery position for delivering the foodstuff and a removal position for inserting the container into and removing it from the holder. Therefore the container has not to be inserted in the delivery position, but rather in an auxiliary which is offset horizontally with respect to the latter and in which the insertion is simpler and easier because of the offset with respect to the delivery position, with the result that the user can insert the container into the holder with less attentiveness. This simpler and easier handling also arises when removing the container from the dispensing device because the removal can also take place from the auxiliary position which is offset horizontally with respect to the delivery position, this being able to take place in a simpler manner and with less attentiveness compared to the insertion of the container into the auxiliary position prior to it being moved together with the support into the delivery position.

The auxiliary position can be offset with respect to the delivery position towards a region which surrounds the delivery position in a curved manner from one side of the dispensing device, over the front operating side towards the other side. In this region, the auxiliary position can be offset laterally and also towards the operating side and also obliquely thereto. In all of these possible positions the auxiliary position is easier accessible to the user, as a result of which the previously described advantages arise when inserting the container into and removing it from the auxiliary position.

A direction of movement which is arched in a curved manner between the auxiliary position and the delivery position is particularly suitable, specifically, in particular, if the arching axis or axis of rotation of the curved direction of movement is offset with respect to the delivery position towards the operating side and at the same time laterally. This makes it possible to arrange a hinge which makes the curved movement possible between the holder and the support offset, with respect to the delivery position towards the operating side and at the same time laterally. For structural reasons and for reasons concerned with using the given space, the rotary hinge can be arranged favourably in this position and with simple refinements. It should be taken into consideration here that a clearance is required on the section of movement between the auxiliary position and the delivery position, in which the container, which is held by the holder, can be moved.

An annular body of which the internal cross-sectional dimension forms an annular receiving opening for the container is particularly suitable for the holder with the result that the latter can be introduced into the annular body from above. In this case, the inner-upper edge of the annular body can form a resting element on which the container rests with an outer flange on its upper edge and is thereby prevented from slipping through the holder. In order to ensure an easy-to-handle and secure grasping of the container when removing the container from the holder, two gripping clearances can be provided in the upper side of the holder, said clearances being arranged opposite to each other and in which two fingers of a user can be placed in order to easily and securely grasp the container. If the adjusting device has a direction of movement which is curved in the form of a circular arch, it is advantageous to provide in the upper side of the holder, two further gripping clearances on the upper side of the holder which, with respect to the previously described gripping clearances, are arranged rotated by an angle which corresponds approximately to the angle which the holder rotates around as it moves from the delivery position into the auxiliary position. According to this embodiment the container can also be grasped in an easy-to-handle manner in the auxiliary position.

Further aspects of the invention likewise improve the accessibility and handling when manipulating the dispensing device, wherein these aspects are such that the dispenser can be produced cost-effectively all by ensuring a reliable functioning.

Advantageous refinements of the invention will be explained in greater detail below with reference to exemplary embodiments and drawings, in which
- Fig. 1: shows a lower part of a dispensing appliance with a dispensing device according to the invention in a perspective front view,
- Fig. 2: shows the dispensing device in a perspective front view,
- Fig. 3: shows a support of the dispensing device in a perspective front view from above,
- Fig. 4: shows the support in a perspective front view from below.

The dispensing appliance, which is referred to in its entirety by 1, is a free-standing appliance which can be placed onto a standing surface 2 or the like and has a base 3 and a housing 4 which extends upwards from the said base and on whose front side 6, which faces the operating side 5, a dispensing device 7 for dispensing a foodstuff in portions, in particular ice cream, is arranged. The dispensing device 7 is situated below an upper front projection 8 of the housing 4, the lower side of which is referred to by 8a and is therefore situated in the region of a front recess 9 of the housing 4 which recess is arranged below the projection 8 and, for example, can extend continuously downwards.

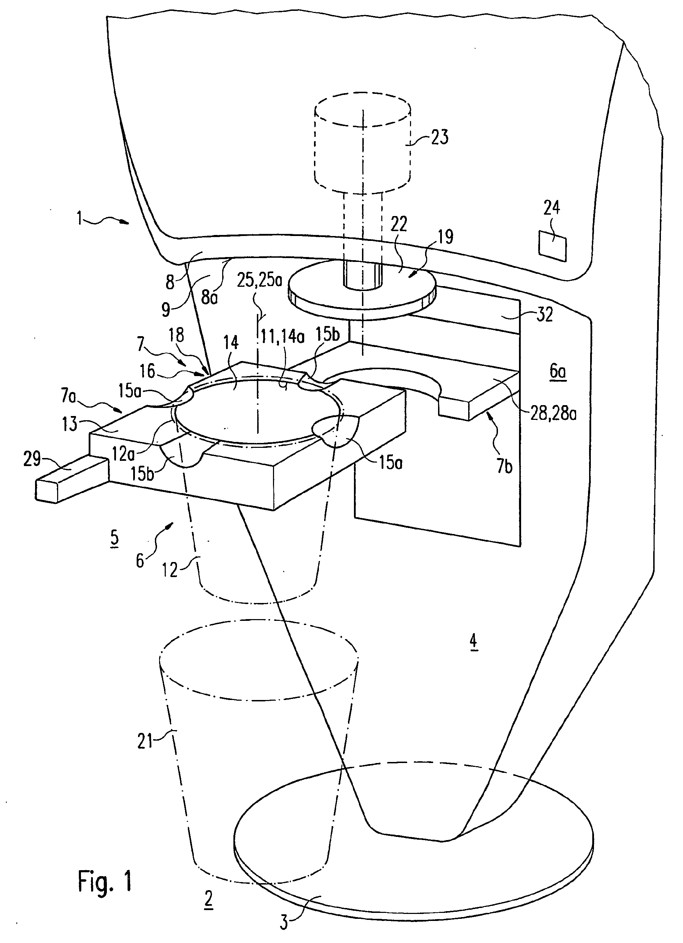

The dispensing device 7 comprises a holder 7a for a container 12 (indicated in Fig. 1 by chain-dotted lines) for the foodstuff and a support 7b which supports the holder 7a and is fastened to the housing 4 or to a frame (not illustrated) in the housing 4.

At least one holding element 11 for holding the container 12 which is, for example, cup-shaped (see Fig. 1), is arranged on the holder 7a. In the embodiment, the holder 7a has an annular body 13 which defines an annular receiving opening 14 for the container 12, into which the container 12 which is shaped e.g. such that it diverges upwards, can be inserted from above. The container 12 and the receiving opening 14 preferably have an essentially circular cross-sectional shape, whereby the container 12 fits with a clearance in the receiving opening 14 and rests with an outer flange 12a, which extends from the upper edge of the container, on the upper rim 14a of the receiving opening 14, which opening constitutes the holding element 11. The inner rim of the receiving opening 14 can present a recession (annular groove) in which the outer flange 12a of the container 12 rests such that the upper surface of the container 12 flushes with the upper contour of the holding element.

The centering of the container 12 in the receiving opening 14 can be achieved by an engagement of the top region of the side walls of the container 12 and the rim of the receiving opening. The cross-sectional dimensions of the side walls and of the rim are set correspondingly.

Alternatively or additionally the centering of the container 12 in the receiving opening 14 can be achieved by an engagement of the outer flange 12a of the container 12 and the rim or the recession of the receiving opening 14.

This centering guarantees that the central axis of the plunger 22, when plunging into the receiving opening 14, will be aligned to the central axis of the container 12.

Note that the path of the oscillating plunger 22 is normal to the centre of the receiving opening 14.

In the embodiment the receiving opening 14 is in a centre with respect to the annular body 13. The outer contour of the annular body 13 may be tetragonal or square, the annular body 13 and the holder 7a being in the form of a plate with an essentially flat upper and lower side. In order to be able to place the container 12 in an easy-to-handle manner onto the holder 7a and also in order to be able to remove it from the holder 7a, two gripping clearances 15a which are arranged lying opposite to each other and are formed by recesses are provided on the upper side of the holder 7a and in which, when the container 12 is being positioned in the holder 7a, two fingers of the operating hand grasping it on opposite sides can be placed and the container 12 can be advantageously deposited. To grasp and remove the container 12 the two fingers can likewise grip into the gripping clearances 15a and remove the container 12 in an easy-to-handle manner.

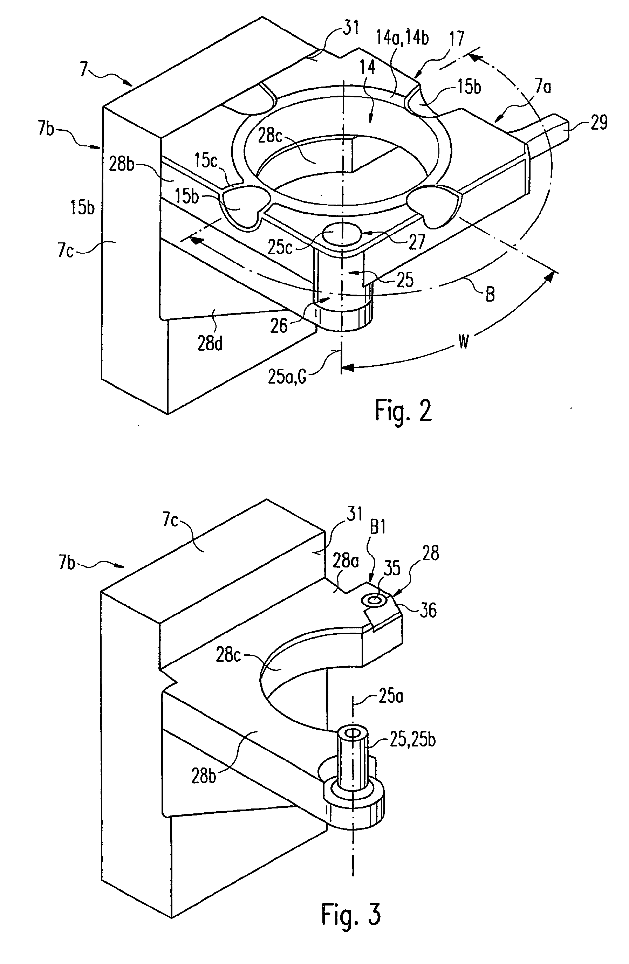

An adjusting device 16 is arranged between the support 7b and the holder 7a and makes it possible to move the holder 7a essentially horizontally relative to the support 7b between a delivery position 17 (illustrated in Fig. 2) and an auxiliary position 18 (illustrated in Fig. 1). The delivery position 17 is situated in the central region of the recess 9 below the projection 8 and therefore close to the springing-back, vertical surface part 6a of the front side 6. The auxiliary position 18 is offset horizontally with respect to the delivery position 17, so that it is easier accessible to the user. A region B (Fig. 2) is appropriate for this, the said region surrounding the delivery position in a curved manner from the one side across the operating side 5 to the other side of the delivery position 17 or of the housing 4. At each point of this region B the auxiliary position 18 is accessible in a simple and easy-to-handle manner. Particularly favourable positions for the auxiliary position 18 are produced if the latter is offset with respect to the delivery position 17 towards the operating side 5, whereby it also may be offset laterally at the same time. With an offset of this type the holder 7a is situated closer to the operating side 5 than the delivery position 17, with the result that the positioning of a container 12 on the holder 7a is made substantially easier. The same also applies to the removal of the container 12 from the holder 7a which will also be described.

The container 12 may be a package for the foodstuff, in particular ice cream, which, if appropriate after being opened, is positioned in the auxiliary position 18 on the holder 7a and is moved together with the holder 7a into the delivery position 17. A discharging device 19 is assigned to the delivery position 17 for discharging the container 12 downwards. This enables the foodstuff to be pressed downwards out of the container 12 and to be conveyed into a further container 21 which may be, for example, a cup or a cone wafer in which or with which the foodstuff is available for consumption.

In order to remove the container 12, the holder 7a is firstly moved into the auxiliary position 18 in which the container 12 can be removed and disposed in an easy-to-handle manner.

The discharging device 19 can be formed by a plunger 22 which is arranged coaxially with respect to the vertical central axis of the delivery position 17 and can be oscillated vertically between a starting position which is situated above the container 12 in the delivery position 17 and a discharging position, which plunges into the container 12, preferably as far as the base thereof, and back again. For this purpose use is made of a drive 23 (illustrated by way of indication) in the housing 4 or in the projection 8. The plunger 22 is guided vertically in a guide (not illustrated) and can be moved down and up again by the drive 23. The discharging movement of the plunger 22 can be triggered by a switch (not illustrated), and it is automatically ended when the plunger 22 is in its upper starting position again.

In the exemplary embodiment the adjusting device 16 is formed by the holder 7a being mounted in a manner such that it can pivot to and fro in a hinge 25, having an approximately vertically directed hinge axis 25a, the hinge axis 25a likewise being offset with respect to the delivery position 17 into the region B.

According to one aspect the hinge axis 25a is arranged on a straight line G which intersects the central axis of the delivery position and encloses, with the vertical central plane E of the dispensing device 7, an acute angle W of preferably approximately 45°.

The hinge 25 can be arranged on one or the other side with respect to the vertical central plane. For left-handed operation, the hinge 25 is situated on the left side. For right-handed operation an arrangement on the right side is advantageous.

In the exemplary embodiment, the hinge axis 25a is situated in the region of a front and lateral corner 26 of the holder 7a in the auxiliary position. It is formed by a hinge pin 25b which protrudes from one hinge part and is mounted rotatably in a hinge opening 25c arranged on the other hinge part. This forms a plug-in connection 27 which makes an installation of the holder 7a possible by plugging it in from above and removal possible by removing it upwards. As a result, the holder 7a can be fitted and removed rapidly and in an easy-to-handle manner. This is particularly advantageous if the holder 7 is to be exchangeable. A plurality of holders 7a are preferably assigned to the dispensing device 7 and are matched to different containers 12. A specific exchange of the holders 7a therefore enables the dispensing device 7 to be matched to an appropriate container 12 in each case, with the result that this container 12 can be used appropriately and securely in the dispensing device 7. Different containers 12 and appropriated holders 7a can differ, for example, that the cross-sectional size or -shape of the container 12 and of the receiving opening 14 differs and is matched to one another.

Since the container 12 is loaded (inserted) downwards during the previously described squeezing out of the container contents, it is advantageous, additionally to the hinge 25, to arrange further supporting elements 28 on the support 7b which support the holder 7a in the delivery position 17, preferably in a region B1 lying opposite to the hinge 25. Effective supporting is provided if two supporting elements 28, for example, the hinge 25 and the further supporting element 28 are provided lying opposite to each other. In the exemplary embodiment, two supporting limbs 28a, 28b are provided, of which one is situated on the front side of the rear base part 7c of the support 7b. A supporting limb 28b is also provided which extends forwards from the base part 7c, supports the holder 7a on one side and in the front end region of which the hinge 25 is formed. A vertical recess 28c for the container 12 in the delivery position 17 is provided in the front side of the supporting limb 28a. The supporting limb 28b can be stabilized by a corner plate 28d.

In the case of a hinge 25 which is offset forwards and laterally, the holder 7a executes the shape of a circular arc during its movement between the positions 17, 18, in which case the auxiliary position 18 can be situated in the vertical central plane, as is also the case for the delivery position 17.

In the case of a rotatable holder 7a, it is advantageous to form, on its upper side, two further lateral gripping clearances 15b on both sides of the opening edge 14a which facilitate the insertion or removal of the container 12 in the delivery position 17. These gripping clearances 15b are rotated with respect to the gripping clearances 15a by the angle of rotation, here by an angle of rotation of 90°.

Edge breaks 14b, 15c can be provided on the opening edge 14a and on the edges of the gripping clearances 15a, 15b.

The container 12 may be a package which is to be opened for the delivery, for example, a casing.

To manually move the holder 7a between the delivery and auxiliary positions 17, 18, it is advantageous to provide, at a distance from the hinge axis 25a, a gripping element 29 which can be grasped with the operating hand to move the holder 7a and is preferably arranged in the front region of the holder 7a. In the exemplary embodiment, the gripping element 29 is formed by a laterally protruding pin which is arranged on the side lying laterally opposite the hinge 25.

It is furthermore advantageous to assign a stop 31 to the holder 7a which limits its movement into the delivery position. In the exemplary embodiment, the stop 31 is formed by the rear part 7c protruding upwards over the rear supporting element 28 and thereby limiting the path of movement of the holder 7a on the rear side.

Furthermore, a means of securing it in the delivery position is expediently provided, for example by means of a releasable latch. In the exemplary embodiment, the supporting element 28 has, in the end region of the supporting limb 28a, a cam depression 34 into which a corresponding cam element (not illustrated) engages on the holder 7a after running over an entry slope 35, whereby the cam element may also be biased. The engagement elements may also be assigned the other way around.

The rear part 7c is fastened to the housing 4 by a fastening device (not illustrated), whereby it may be positioned in a housing recess 32.

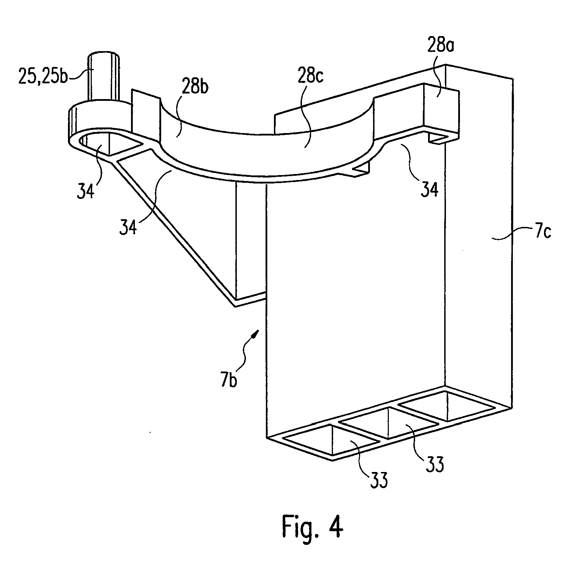

The holder 7a and the support 7b consist of a corrosion-resistant and preferably also lightweight material. A light metal or plastic is suitable for this. A hollow manner of construction is preferably also provided in order to save material and weight. As can be seen in particular in Fig. 4, chambers 33, 34 which are open on the lower side are provided in the rear part 7c and in the supporting limbs.

## Claims

1. Dispenser, e.g. for ice cream, comprising:
- a holder (7a) for a container (12), the holder (7) presenting a receiving opening (14) in which the container (12) is hanging, wherein an outer flange (12a) of the container (12) rests on the upper rim of the receiving opening (14), and
- a plunger (22) adapted to move in and out and pass through the receiving opening (14) and into the container (12) from above in order to dispense product at the lower end of the container (12).

2. Dispenser according to claim 1,
wherein the cross-sectional dimension of the receiving opening (14) is adapted to the cross-sectional dimension of the container (12) such that there is a clearance between the side walls of the container (12) and the rim of the receiving opening (14).

3. Dispenser according to claim 1 or 2,
wherein the container (12) is designed to be inserted into the receiving opening (14) from above.

4. Dispenser according to anyone of the preceding claims,
wherein the contour of the container (12) has an upwardly divergent shape.

5. Dispenser according to anyone of the preceding claims,
wherein the inner rim of the receiving opening (14) presents an annular recession in which the outer flange (12a) of the container (12) is resting such that the upper surface of the flange (12a) flushes with the upper surface of the holder (7a).

6. Dispenser according to anyone of the preceding claims,
wherein the plunger (22) is designed to plunge downwards until it reaches the base of the container (12).

7. Dispenser according to anyone of the preceding claims,
wherein the holder (7a) has the shape of a plate.

8. Dispensing device (7) for a foodstuff, in particular ice cream, having a holder (7a) for a container (12), a support (7b) for the holder (7a) and a plunger (22) adapted to pass into the container (12) from above in order to dispense product at a lower end of the container (12),
**characterized in that**
the holder (7a) is connected to the support (7b) by an adjusting device (16) and can be moved in the adjusting device (16) between a delivery position (17) for delivering the foodstuff and an auxiliary position (18) for inserting the container (12) into and removing it from the holder (7a).

9. Dispensing device according to Claim 8, **characterized in that**
the auxiliary position (18) is offset with respect to the delivery position (17) towards a region (B) which surrounds the delivery position (17) in a curved manner from one side over the front operating side (5) towards the other side.

10. Dispensing device according to Claim 9, **characterized in that**
the removal position (18) is offset with respect to the delivery position (17) towards the operating side (5) .

11. Dispensing device according to one of claims 8 to 10,
**characterized in that**
the adjusting device (16) has a rotary hinge (25) with an approximately vertical axis of rotation (25a) which is offset with respect to the delivery position (17) towards the region (B).

12. Dispensing device according to Claim 11, **characterized in that**
the axis of rotation (25a) is offset with respect to the delivery position (17) laterally and/or towards the operating side (5).

13. Dispensing device according to Claim 12, **characterized in that**
the axis of rotation (25a) is arranged on a straight line (G) which starts from the delivery position (17) and extends obliquely to the left or right towards the operating side (5).

14. Dispensing device according to one of the preceding Claims 11 to 13,
**characterized in that**
the holder (7a) has, on one side, preferably on the side lying opposite the laterally offset axis of rotation (25a), an engagement element (29) for the manual moving of the holder (7a).

15. Dispensing device according to Claim 14, **characterized in that**
the engagement element (29) is arranged on the front side of the holder (7a) that faces the operating side (5).

16. Dispensing device according to Claim 14 or 15,
**characterized in that**
the engagement element (29) is formed by a pin which protrudes from the holder (7a).

17. Dispensing device according to one of the preceding claims,
**characterized in that**
the holder (7a) has an annular body (13) which surrounds a receiving space (14) for the container (12) .

18. Dispensing device according to Claim 17, **characterized in that**
the cross-sectional size of the receiving space (14) is matched with a clearance for movement to the cross-sectional size of the container (12), and the upper edge (14a) of the receiving space (14) supports a flange (12a) which is arranged on the upper edge of the container (12).

19. Dispensing device according to anyone of claims 8 to 18,
**characterized in that**
two mutually opposite gripping clearances (15a, 15b) are arranged in each case on the upper side of the holder (7a) in such a manner that they lie laterally opposite to each other in the auxiliary position and/or in the delivery position.

20. Dispensing device according to anyone of the preceding claims,
**characterized in that**
the support (7b) has, below the holder (7a), a clearance (28c) for the container (12) which is open towards the region (B).

21. Dispensing device according to anyone of the preceding claims,
**characterized in that**
the holder (7a) is supported, at least in the delivery position (17), with respect to the receiving space (14) for the container (12) at at least two mutually opposite points by supporting elements (28) of the support (7b).

22. Dispensing device according to anyone of the claims 11 to 21,
**characterized in that**
the rotary hinge (25) is arranged on a supporting arm (28b) which extends from a supporting body (7c) of the support (7b) towards the operating side (5) and is offset laterally with respect to the delivery position (17), preferably is offset to the left.

23. Dispensing device according to anyone of claims 8 to 22,
**characterized in that**
the support (7b) has a stop (31) for limiting the movement of the holder (7a) into the delivery position (17).

24. Dispensing device according to anyone of claims 8 to 23,
**characterized in that**
engagement elements are provided on the holder (7a) and support (7b) in order to releasably secure the mutual positions in the delivery position (17).

## Patentansprüche

1. Ausgabegerät, z.B. für Eiscreme, umfassend:
- einen Halter (7a) für einen Behälter (12), wobei der Halter (7) eine Aufnahmeöffnung (14) bietet, in dem der Behälter (12) hängt, wobei ein Außenbund (12a) des Behälters (12) auf der oberen Kante der Aufnahmeöffnung (14) aufliegt, und
- einen Kolben (22), der für die Bewegung von innen und nach außen durch die Aufnahmeöffnung (14) hindurch und in den Behälter (12) von oben hinein ausgebildet ist, um das Lebensmittel am unteren Ende des Behälters (12) auszugeben.

2. Ausgabegerät gemäß Anspruch 1,
wobei die Querschnittsabmessung der Aufnahmeöffnung (14) an die Querschnittsabmessung des Behälters (12) dergestalt angepasst ist, dass eine Aussparung zwischen den Seitenwänden des Behälters (12) und der Kante der Aufnahmeöffnung (14) besteht.

3. Ausgabegerät gemäß Anspruch 1 oder 2, wobei der Behälter (12) dafür gestaltet ist, in die Aufnahmeöffnung (14) von oben eingefügt zu werden.

4. Ausgabegerät gemäß einem der vorhergehenden Ansprüche, wobei die Kontur des Behälters (12) eine nach oben auseinandergehende Form aufweist.

5. Ausgabegerät gemäß einem der vorhergehenden Ansprüche, wobei die Innenkante der Aufnahmeöffnung (14) eine ringförmige Vertiefung bildet, in der der Außenbund (12a) des Behälters (12) dergestalt aufliegt, dass die Oberseite des Bundes (12a) mit der Oberseite der Halterung (7a) bündig abschließt.

6. Ausgabegerät gemäß einem der vorherigen Ansprüche, wobei der Kolben (22) gestaltet ist, um sich nach unten herabzubewegen, bis er den Boden des Behälters (12) erreicht.

7. Ausgabegerät gemäß einem der obigen Ansprüche, wobei der Halter (7a) die Form einer Platte aufweist.

8. Ausgabevorrichtung (7) für ein Nahrungsmittel, im Besonderen Eiscreme, mit einer Halterung (7a) für einen Behälter (12), einer Auflage (7b) für den Halter (7a) und einen Kolben (22), der dazu ausgebildet ist, in den Behälter (12) von oben hinzugehen, um das Nahrungsmittel am unteren Ende des Behälters (12) auszugeben,
**dadurch gekennzeichnet, dass**
der Halter (7a) mit der Auflage (7b) durch eine Justiervorrichtung (16) verbunden ist und in der Justiervorrichtung (16) zwischen einer Ausgabeposition (17) zur Ausgabe des Nahrungsmittels und einer Hilfsposition (18) zum Einfügen des Behälters (12) in den Halter (7a) und dessen Entnahme daraus bewegt werden kann.

9. Ausgabevorrichtung gemäß Anspruch 8,
**dadurch gekennzeichnet, dass**
die Hilfsposition (18) bezüglich der Ausgabeposition (17) in Richtung des Bereichs (B) versetzt ist, der die Ausgabeposition (17) in gekrümmter Form von einer Seite über die vordere Betriebsseite (5) hin zur anderen Seite umgibt.

10. Ausgabevorrichtung gemäß Anspruch 9,
**dadurch gekennzeichnet, dass**
die Entnahmeposition (18) bezüglich der Ausgabeposition (17) in Richtung der Betriebsseite (5) versetzt ist.

11. Ausgabegerät gemäß einem der Ansprüche 8 bis 10,
**dadurch gekennzeichnet, dass**
die Justiervorrichtung (16) ein drehbares Gelenk (25) mit einer annähernd vertikalen Rotationsachse (25a) aufweist, die bezüglich der Ausgabeposition (17) in Richtung von Bereich (B) versetzt ist.

12. Ausgabevorrichtung gemäß Anspruch 11,
**dadurch gekennzeichnet, dass**
die Rotationsachse (25a) bezüglich der Ausgabeposition (17) seitlich und/oder in Richtung der Betriebsseite (5) versetzt ist.

13. Ausgabevorrichtung gemäß Anspruch 12,
**dadurch gekennzeichnet, dass**
die Rotationsachse (25a) auf einer geraden Linie (G) angeordnet ist, die ab der Ausgabeposition (17) beginnt und schräg nach rechts oder links in Richtung der Betriebsseite (5) verläuft.

14. Ausgabevorrichtung gemäß einem der vorhergehenden Ansprüche 11 bis 13,
**dadurch gekennzeichnet, dass**
der Halter (7a) an einer Seite, vorzugsweise an der Seite, die abgewandt zur seitlich versetzten Rotationsachse (25a) liegt, ein Befestigungselement (29) zum Bewegen des Halters (7a) von Hand aufweist.

15. Ausgabevorrichtung gemäß Anspruch 14,
**dadurch gekennzeichnet, dass**
das Befestigungselement (29) an der Vorderseite des Halters (7a) angeordnet ist, die der Betriebsseite (5) gegenüberliegt.

16. Ausgabevorrichtung gemäß Anspruch 14 oder 15,
**dadurch gekennzeichnet, dass**
das Befestigungselement (29) als Zapfen ausgebildet ist, der aus dem Halter (7a) hervorragt.

17. Ausgabevorrichtung gemäß einem der vorhergehenden Ansprüche,
**dadurch gekennzeichnet, dass**
der Halter (7a) einen ringförmigen Körper (13) aufweist, der einen Aufnahmeraum (14) für den Behälter (12) umgibt.

18. Ausgabevorrichtung gemäß Anspruch 17,
**dadurch gekennzeichnet, dass**
die Querschnittsgröße des Aufnahmeraums (14) auf eine Aussparung zum Bewegen der Querschnittsgröße des Behälters (12) abgestimmt ist, und die Oberkante (14a) des Aufnahmeraums (14) einen Bund (12a) hält, der an der Oberkante des Behälters (12) ausgebildet ist.

19. Ausgabevorrichtung gemäß einem der Ansprüche 8 bis 18,
**dadurch gekennzeichnet, dass**
zwei einander gegenüberliegende Greifhilfe-Aussparungen (15a, 15b) jeweils an der Oberseite des Halters (7a) dergestalt ausgebildet sind, dass sie seitlich zueinander abgewandt in der Hilfsposition und/oder der Ausgabeposition liegen.

20. Ausgabevorrichtung gemäß einem der vorhergehenden Ansprüche,
**dadurch gekennzeichnet, dass**
die Auflage (7a) unterhalb des Halters (7a) eine Aussparung (28c) für den Behälter (12) aufweist, die in Richtung des Bereichs (B) offen ist.

21. Ausgabevorrichtung gemäß einem der vorhergehenden Ansprüche,
**dadurch gekennzeichnet, dass**
der Halter (7a) zumindest in der Ausgabeposition (17) bezüglich des Aufnahmeraums (14) für den Behälter (12) an zumindest zwei voneinander abgewandt liegenden Punkten durch die Stützelemente (28) der Auflage (7b) gehalten wird.

22. Ausgabevorrichtung gemäß einem der Ansprüche 11 bis 21,
**dadurch gekennzeichnet, dass**
das drehbare Gelenk (25) auf dem Auflagearm (28b) ausgebildet ist, der sich von dem Auflagekörper (7c) der Auflage (7b) in Richtung der Betriebsseite (5) erstreckt und seitlich bezüglich der Ausgabeposition (17) versetzt ist, wobei er vorzugsweise nach links versetzt ist.

23. Ausgabevorrichtung gemäß einem der Ansprüche 8 bis 22,
**dadurch gekennzeichnet, dass**
die Auflage (7b) ein Stoppelement (31) zur Begrenzung der Bewegung des Halters (7a) in der Ausgabeposition (17) aufweist.

24. Ausgabevorrichtung gemäß einem der Ansprüche 8 bis 23,
**dadurch gekennzeichnet, dass**
auf dem Halter (7a) und der Auflage (7b) Befestigungselemente ausgebildet sind, um deren Relativstellung in der Ausgabeposition (17) zu sichern.

## Revendications

1. Distributeur, par exemple pour de la crème glacée, comportant :
- un support (7a) pour un récipient (12), le support (7) présentant une ouverture (14) de réception dans laquelle le récipient (12) est suspendu, dans lequel un rebord extérieur (12a) du récipient (12) repose sur le bord supérieur de l'ouverture (14) de réception, et
- un plongeur (22) conçu pour se déplacer vers l'intérieur et l'extérieur et passer à travers l'ouverture (14) de réception et entrer dans le récipient (12) depuis le dessus afin de distribuer un produit à l'extrémité inférieure du récipient (12).

2. Distributeur selon la revendication 1,
dans lequel la dimension en section transversale de l'ouverture (14) de réception est adaptée à la dimension en section transversale du récipient (12) de manière qu'il y ait un espace entre les parois latérales du récipient (12) et le bord de l'ouverture (14) de réception.

3. Distributeur selon la revendication 1 ou 2,
dans lequel le récipient (12) est conçu pour être inséré depuis le dessus dans l'ouverture (14) de réception.

4. Distributeur selon l'une quelconque des revendications précédentes,
dans lequel le contour du récipient (12) a une forme divergeant vers le haut.

5. Distributeur selon l'une quelconque des revendications précédentes,
dans lequel le bord intérieur de l'ouverture (14) de réception présente un évidement annulaire dans lequel le rebord extérieur (12a) du récipient (12) repose de façon que la surface supérieure du rebord (12a) soit à fleur avec la surface supérieure du support (7a).

6. Distributeur selon l'une quelconque des revendications précédentes,
dans lequel le plongeur (22) est conçu pour plonger vers le bas jusqu'à ce qu'il atteigne la base du récipient (12).

7. Distributeur selon l'une quelconque des revendications précédentes, dans lequel le support (7a) a la forme d'une plaque.

8. Dispositif (7) de distribution pour un produit alimentaire, en particulier de la crème glacée, ayant un support (7a) pour un récipient (12), une console (7b) pour le support (7a) et un plongeur (22) conçu pour pénétrer dans le récipient (12) depuis le dessus afin de distribuer un produit à une extrémité inférieure du récipient (12),
**caractérisé en ce que**
le support (7a) est relié à la console (7b) par un dispositif de réglage (16) et peut être déplacé dans le dispositif de réglage (16) entre une position de distribution (17) pour distribuer le produit alimentaire et une position auxiliaire (18) pour l'introduction du récipient (12) dans le support (7a) et son enlèvement de celui-ci.

9. Dispositif de distribution selon la revendication 8, **caractérisé en ce que**
la position auxiliaire (18) est décalée par rapport à la position de distribution (17) vers une région (B) qui entoure la position de distribution (17) de manière incurvée depuis un côté situé au-dessus du côté avant de manoeuvre (5) vers l'autre côté.

10. Dispositif de distribution selon la revendication 9, **caractérisé en ce que**
la position d'enlèvement (18) est décalée par rapport à la position de distribution (17) vers le côté de manoeuvre (5).

11. Dispositif de distribution selon l'une des revendications 8 à 10, **caractérisé en ce que**
le dispositif de réglage (16) a une charnière tournante (25) avec un axe approximativement vertical de rotation (25a) qui est décalé par rapport à la position de distribution (17) vers la région (B).

12. Dispositif de distribution selon la revendication 11, **caractérisé en ce que**
l'axe de rotation (25a) est décalé par rapport à la position de distribution (17) latéralement et/ou vers le côté de manoeuvre (5).

13. Dispositif de distribution selon la revendication 12, **caractérisé en ce que**
l'axe de rotation (25a) est agencé sur une ligne droite (G) qui part de la position de distribution (17) et s'étend obliquement vers la gauche ou la droite en direction du côté de manoeuvre (5).

14. Dispositif de distribution selon l'une des revendications précédentes 11 à 13,
**caractérisé en ce que**
le support (7a) comporte, sur un côté, avantageusement sur le côté s'étendant en opposition à l'axe de rotation (25a) décalé latéralement, un élément de prise (29) pour déplacer manuellement le support (7a).

15. Dispositif de distribution selon la revendication 14, **caractérisé en ce que**
l'élément de prise (29) est agencé sur le côté avant du support (7a) qui fait face au côté de manoeuvre (5).

16. Dispositif de distribution selon la revendication 14 ou 15,
**caractérisé en ce que**
l'élément de prise (29) est formé d'un ergot qui fait saillie du support (7a).

17. Dispositif de distribution selon l'une des revendications précédentes,
**caractérisé en ce que**
le support (7a) a un corps annulaire (13) qui entoure un espace de réception (14) pour le récipient (12).

18. Dispositif de distribution selon la revendication 17, **caractérisé en ce que**
la dimension en section transversale de l'espace de réception (14) est adaptée avec un espace pour un mouvement à la dimension en section transversale du récipient (12), et le bord supérieur (14a) de l'espace de réception (14) supporte un rebord (12a) qui est agencé sur le bord supérieur du récipient (12).

19. Dispositif de distribution selon l'une quelconque des revendications 8 à 18,
**caractérisé en ce que**
deux espaces de préhension mutuellement opposés (15a, 15b) sont agencés dans chaque cas sur le côté supérieur du support (7a) d'une manière telle qu'ils s'étendent latéralement en opposition l'un à l'autre dans la position auxiliaire et/ou dans la position de distribution.

20. Dispositif de distribution selon l'une quelconque des revendications précédentes,
**caractérisé en ce que**
la console (7b) présente, en dessous du support (7a), un espace (28c) pour le récipient (12) qui est ouvert vers la région (B).

21. Dispositif de distribution selon l'une quelconque des revendications précédentes,
**caractérisé en ce que**
le support (7a) est soutenu, au moins dans la position de distribution (17), par rapport à l'espace de réception (14) pour le récipient (12) en au moins deux points mutuellement opposés par des éléments (28) de soutien de la console (7b).

22. Dispositif de distribution selon l'une quelconque des revendications 11 à 21,
**caractérisé en ce que**
la charnière tournante (25) est agencée sur un bras de soutien (28b) qui s'étend depuis un corps de soutien (7c) de la console (7b) vers le côté de manoeuvre (5) et est décalée latéralement par rapport à la position de distribution (17), avantageusement décalée vers la gauche.

23. Dispositif de distribution selon l'une quelconque des revendications 8 à 22,
**caractérisé en ce que**
la console (7b) comporte une butée (31) pour limiter le mouvement du support (7a) jusque dans la position de distribution (17).

24. Dispositif de distribution selon l'une quelconque des revendications 8 à 23,
**caractérisé en ce que**
des éléments de prise sont prévus sur le support (7a) et la console (7b) pour bloquer de façon libérable les positions mutuelles dans la position de distribution (17).
